(19) Europäisches Patentamt
European Patent Office
Office européen des brevets

(11) **EP 1 642 420 B1**

(12) **EUROPEAN PATENT SPECIFICATION**

(45) Date of publication and mention
of the grant of the patent:
**23.07.2014 Bulletin 2014/30**

(51) Int Cl.:
***H04W 74/08*** *(2009.01)*   *H04W 28/18* *(2009.01)*

(21) Application number: **04752579.5**

(22) Date of filing: **07.06.2004**

(86) International application number:
**PCT/US2004/015584**

(87) International publication number:
**WO 2005/006661 (20.01.2005 Gazette 2005/03)**

(54) **METHOD AND APPARATUS TO PROVIDE CHANNEL ACCESS PARAMETER**

VERFAHREN UND EINRICHTUNG ZUR BEREITSTELLUNG VON KANALZUGRIFFSPARAMETERN

PROCEDE ET DISPOSITIF DESTINES A FOURNIR DES PARAMETRES D'ACCES A DES CANAUX

(84) Designated Contracting States:
**AT BE BG CH CY CZ DE DK EE ES FI FR GB GR
HU IE IT LI LU MC NL PL PT RO SE SI SK TR**

(30) Priority: **30.06.2003 US 608067
24.09.2003 US 668173**

(43) Date of publication of application:
**05.04.2006 Bulletin 2006/14**

(60) Divisional application:
**09013504.7 / 2 154 926**

(73) Proprietor: **Intel Corporation
Santa Clara, CA 95052-8119 (US)**

(72) Inventors:
• **GINZBURG, Boris**
**Haifa 32812 (IL)**
• **KONDRATIEV, Vladimir**
**Haifa 34521 (IL)**
• **TOLPIN, Alexander**
**Netanya 42334 (IL)**

(74) Representative: **Dunlop, Hugh Christopher et al
RGC Jenkins & Co.
26 Caxton Street
London SW1H 0RJ (GB)**

(56) References cited:
**US-A1- 2002 110 085**

• **HAITAO WU ET AL: "IEEE 802.11 distributed
coordination function(DCF): analysis and
enhancement" ICC 2002. 2002 IEEE
INTERNATIONAL CONFERENCE ON
COMMUNICATIONS. CONFERENCE
PROCEEDINGS. NEW YORK, NY, APRIL 28 - MAY
2, 2002, IEEE INTERNATIONAL CONFERENCE
ON COMMUNICATIONS, NEW YORK, NY : IEEE,
US, vol. VOL. 1 OF 5, 28 April 2002 (2002-04-28),
pages 605-609, XP010589565 ISBN:
0-7803-7400-2**
• **VITSAS V: "Throughput analysis of linear backoff
scheme in wireless LANs" ELECTRONICS
LETTERS, IEE STEVENAGE, GB, vol. 39, no. 1, 9
January 2003 (2003-01-09), pages 99-100,
XP006019540 ISSN: 0013-5194**

**Description**

**BACKGROUND OF THE INVENTION**

In wired and/or wireless local area networks (e. g. LAN and WLAN, respectively) devices may use an access mechanism to access the network. An example of an access mechanism may be a Carrier Sense Multiple Access with Collision Avoidance (CSMA/CA) and, more specifically, CSMA/CA with a binary exponential backoff method.

In this method, the devices, also termed stations, may use a predefined time slot of a time frame to access the network. This time frame may be known in the art as a contention window (CW). The CW may have two parameters, namely, $CW_{min}$ and $CW_{max}$, wherein $CW_{min}$ may be defined as a minimal size of the CW and $CW_{max}$ may be defined as the maximal size of the CW. The CSMA/CA mechanism may increase $CW_{min}$ until $CW_{max}$ is reached or until receiving an acknowledge (ACK) message indicating successful transmission of a packet. The process of increasing the $CW_{min}$ from its minimum value upward may be repeated for the duration of a transmission of a packet. The optimal CW range depends on the probability of collision in the network. Thus, the fixed pre-defined values of $CW_{min}$ and $CW_{max}$ may result in an incensement of the number of collisions. Furthermore, packets may be unnecessarily delayed before being transmitted. Furthermore, the data throughput in the network may be impaired.

Thus, there is a need for better ways to mitigate the above described disadvantages.

Haitao Wu et al.: "IEEE 802.11 distributed coordination function (DCF): analysis and enhancement" ICC 2002, NY, 28 April 2002, pages 605-609 proposes a throughput enhancement mechanism for DCF by adjusting the CW resetting scheme relating to the features of the preamble of the independent claims.

Vistas V: "Throughput analysis of linear backoff scheme in wireless LANs" Electronics Letters, IEE Stevenage, GB, vol. 39, no. 1, 9 January 2003, pages 99-100 presents an analytical study of the effectiveness of linear contention window adjustment combined with a long slot duration in the collision avoidance procedures of wireless LAN protocols. A long collision avoidance slot (CAS) duration that includes the beginning of the CTS frame deals with collisions caused by hidden stations. Results indicate that linear back off minimises empty CASs and reaches a throughput performance very close to maximum. Maximum throughput results obtained by differentiating the throughput equation are compared with similar results in the literature for the IEEE 802.11 protocol.

US2002/0110085A1 discloses contention adaptation concepts for access to a shared medium, and adaptive algorithms for contention access using probabilities and backoffs including the features of the preamble of the independent claims of the present invention.

**STATEMENT OF INVENTION**

The present invention is defined by the features of the independent claims. Preferred advantageous embodiments thereof are defined by the features of the dependent claims.

**BRIEF DESCRIPTION OF THE DRAWINGS**

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

FIG. 1 is a schematic illustration of a wireless communication system that may include a wireless mobile unit according to an exemplary embodiment of the present invention;
FIG. 2 is a schematic illustration of an exemplary timing diagram of a distributed coordination function (DCF) according to embodiments of the present invention;
FIG. 3 is a block diagram of a receiver according to an exemplary embodiment of the present invention;
FIG. 4 is a flowchart of a method according to some exemplary embodiments of the present invention; and
FIG. 5 is a flowchart of a method according to further exemplary embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

**DETAILED DESCRIPTION OF EMBODIMENTS OF THE INVENTION**

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as riot to obscure the present invention.

Some portions of the detailed description, which follow, are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

It should be understood that the present invention may be used in a variety of applications. The circuits and techniques disclosed herein may be used in many apparatuses such as stations of a radio system. Stations intended to be included within the scope of the present invention include, by way of example only, wireless local area network (WLAN) stations, two-way radio stations, digital system stations, analog system stations, cellular radiotelephone stations, and the like.

Types of WLAN stations intended to be within the scope of the present invention include, although are not limited to, stations for receiving and transmitting spread spectrum signals such as, for example, Frequency Hopping Spread Spectrum (FHSS), Direct Sequence Spread Spectrum (DSSS), Orthogonal frequency-division multiplexing (OFDM) and the like.

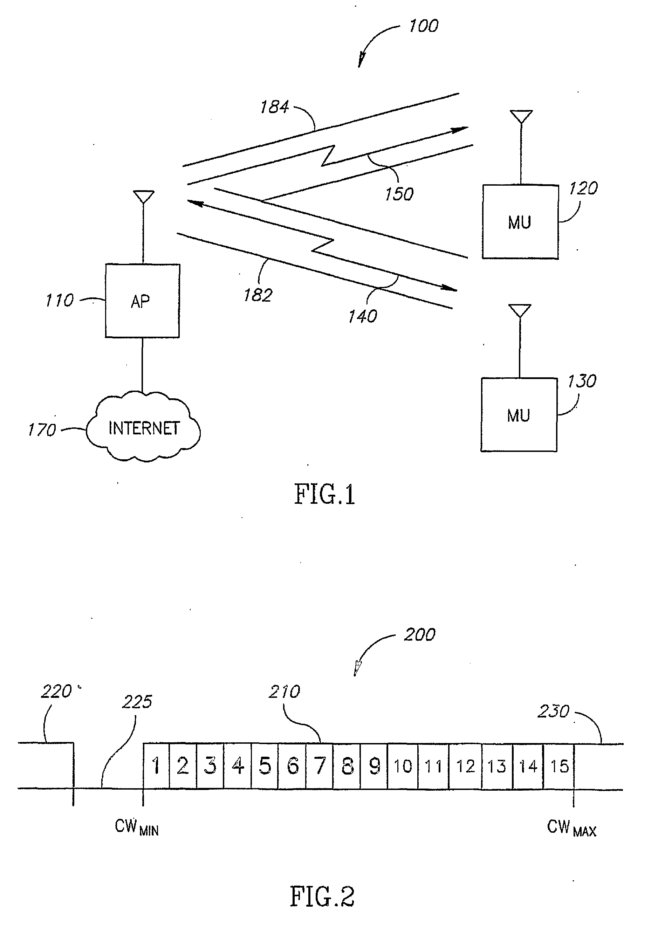

Turning to FIG. 1, a wireless communication system 100, for example, a WLAN communication system is shown. The exemplary WLAN communication system 100 may be defined, e.g., by IEEE 802.11 -1999 standard, as a basic service set (BSS). For example, the BSS may include at least one access point (AP) 110 and at least one mobile unit (MU) 130. MUs 130 and 120 may be in communication with one another and/or with the Internet 170 through AP 110. For example, AP 110 may control the communication by sending control commands that may include access parameters via beacons 140, 150, which may be transmitted through channels 182, 184, respectively, if desired. In other embodiments of the present invention, wireless communication system 100 may include two or more APs and two or more MUs, if desired, in which case the arrangement of wireless communication system 100 may be referred to by IEEE 802.11 -1999 standard as an extended service set (ESS).

Turning to FIG. 2, an illustration of an exemplary timing diagram of a distributed coordination function (DCF) according to embodiments of the present invention is shown. A CSMA/CA with binary exponential backoff may be used with embodiments of the present invention. This access mechanism may also be known in the art as a "listen before talk" access mechanism that permits MUs and APs to transmit when a wireless station such as, for example, a mobile unit, an access point, etc., may be free from transmission. This mechanism may prevent collisions between transmission from stations (e.g., MUs, APs, etc.) of wireless communication system 100.

The access mechanism may transmit one or more channel access parameters 200 to stations of wireless communication system 100. In the exemplary timing diagram of FIG. 2, channel access parameter 200 is a contention window (CW). However, in embodiments of the invention, channel access parameter may be $CW_{min}$, $CW_{max}$, a backoff parameter, and the like.

In some embodiments of the present invention, $CW_{min}$ may also be a backoff parameter.

CW 200 may include at least two access parameters, e.g., $CW_{min}$ and $CW_{max}$. In some embodiments of the invention, a minimum value of the $CW_{min}$ parameter may be a multiple of 4 of the number of active stations (e.g. active MUs, APs, etc.). $CW_{min}$ may vary from 15 time slots 210 according to IEEE 802.11a standard, or 31 time slots 210 according to IEEE 802.11b standard, to 1023 time slots 210, if desired. Time slots 210 may be marked with a number which may be selected randomly by the CSMA/CA mechanism. In embodiments of the inventions, the binary exponential backoff mechanism of AP 110 may choose a random number, for example, one of time slots 210, which may be allocated to MU 120 for transmission. Based on the random number chosen, for example, slot 210 number 9, MU 120 may wait a predetermined time period which may include a time period 225 and the time until the selected slot (e.g. slots 210 numbered 1 to 8) and the time of selected slot 210, if desired.

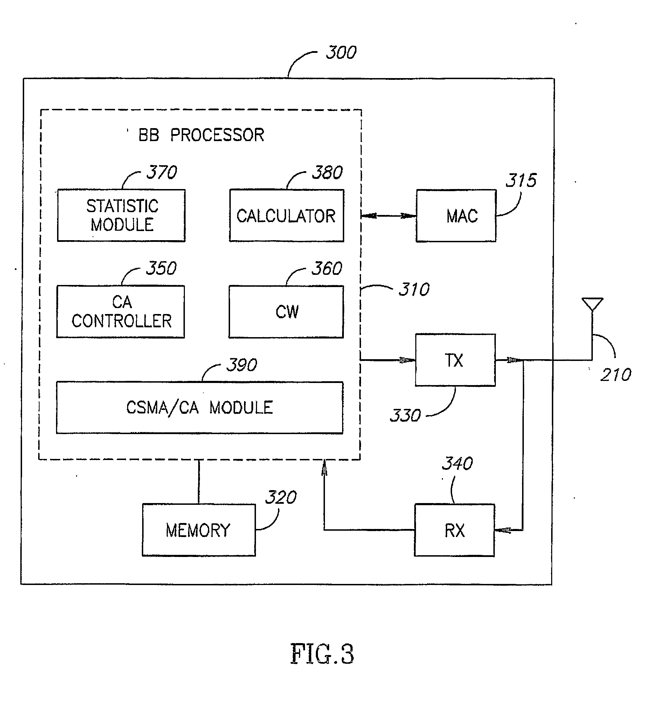

Turning to FIG. 3, a block diagram of an AP 300 according to some embodiments of the present invention is shown. At least one antenna 210 that may be used to provide a transmission, for example beacon 140, to one or more mobile units, for example MU 120, may be connected to AP 300. Beacon 140 may include at least one channel access parameter, for example, $CW_{min}$, $CW_{max}$. Antenna 210 that may be used with embodiments of the present invention, may be an omni-directional antenna, a monopole antenna, a dipole antenna, an end fed antenna, a circularly polarized antenna, a microstrip antenna, a diversity antenna and the like.

AP 300 may include a transmitter 330 and a receiver 340, a processor 310, for example a base-band (BB) processor, medium access control (MAC) 315 and a memory 320.

MAC 315 and BB processor 310 may operate to provide a channel access parameter to MU 120 and/or MU 130 of wireless communication system 100. In some embodiments of the present invention, MAC 315 and BB Processor 310 may include a channel access (CA) controller 350. CA controller 350 may select a channel access parameter from a CW 360. CA controller 350 may dynamically adjust parameters of CW 360 e.g., $CW_{min}$, $CW_{max}$.

In some embodiments of the present invention, receiver 340 may receive packets, for example, one or more packets included in transmission 220. A statistic module 370 may accumulate a packet time of the received packet with a packet time parameter stored in memory 320, if desired. Statistic module 370 may provide the packet time parameter to calculator 380 which may calculate a collision probability parameter 380.

Calculator 380 may estimate a throughput loss parameter based on the packet time parameter and may calculate the probability of collisions based on the estimated throughput loss parameter, if desired. In other embodiment of the invention, calculator 380 may estimate a network load parameter, for example, the network load of wireless communication network 100, based on the packet time parameter and the collision probability parameter. Based on the network load parameter, calculator 380 may estimate the throughput loss parameter, if desired.

CA controller 350 may operate according to mechanism provided by a CSMA/CA module 390. For example, CSMA/CA module 390 may include a CSMA/CA mechanism incorporating collision avoidance with exponential backoff. CSMA/CA module 390 may control the operation of transmitter 330. CA controller 350 may be adjusted based on a probability of collisions between two or more packets transmitted from at least two MUs, e.g., MUs 120, 130. In addition, CA controller 350 may adjust $CW_{min}$ and $CW_{max}$ based on the network load parameter, if desired.

In some embodiments of the present invention BB processor 310 may be a digital signal processor or the like. Furthermore, Statistic module 370, calculator 380, CW 360, CSM/CA module 390 and CA controller 350 may be implemented by hardware, by software, or by any suitable combination of hardware and/or software.

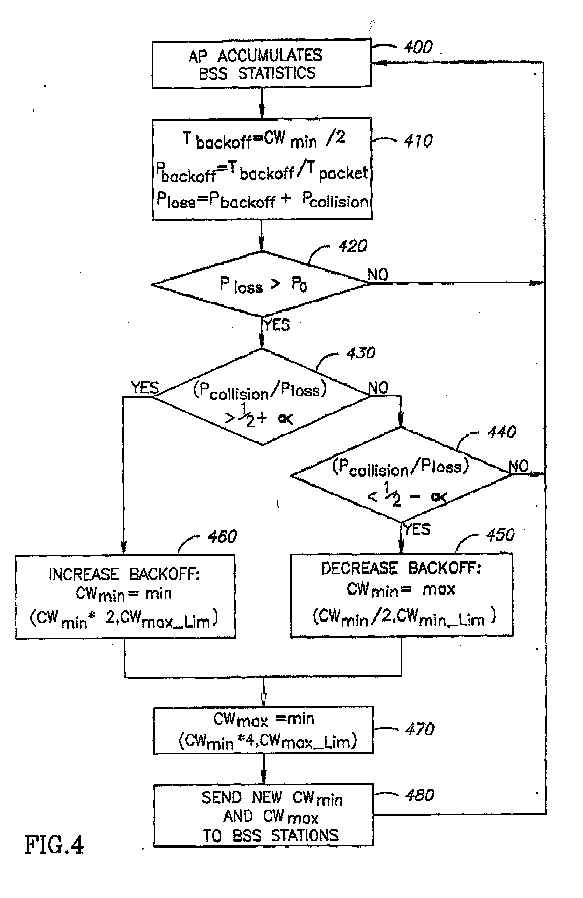

Turning to FIG. 4 an exemplary method of adjustment of CW parameters according to some embodiment of the present invention is shown. AP 110 may use the method described below to adjust the CW parameters according to a basic service set (BSS load.

AP 110 may accumulate the statistics for a period of N beacons, for example, a packet time $T_{packet}$ (block 400). In the end of the period of N beacons, AP 110 may estimate and/or calculate a probability of collisions parameter $P_{collision}$. Accordingly, AP 110 may calculate a backoff time $T_{backoff}$, a backoff parameter $P_{backoff}$, and a throughput loss parameter $P_{loss}$, which may be based on a packet loss statistic, if desired (block 410).

If desired, AP 110 may calculate $T_{backoff}$, $P_{backoff}$, and $P_{loss}$ according to the following exemplary equations:

$$T_{backoff} = \tfrac{1}{2}\, CW_{min} \tag{1}$$

$$P_{backoff} = T_{backoff}/T_{packet} \tag{2}$$

$$P_{loss} = P_{backoff} + P_{collision} \tag{3}$$

wherein $T_{packet}$ may be an average time for all transmitted and successfully received packets.

AP 110 may compare $P_{loss}$ to a predetermined threshold of packet loss, $P_0$ (block 420). In addition, AP 110 may check if a network load as depicted by $P_{collisions}/P_{loss}$ may be above or below a predetermined threshold, for example, $\tfrac{1}{2}+\alpha$ (block 430, wherein a may be referred to as a hysteresis coefficient, which may be used to avoid jittering, if desired. If the network load is above the predetermined threshold $\tfrac{1}{2}+\alpha$, AP 110 may increase $CW_{min}$, for example, according to the following exemplary function (block 460):

$$CW_{min}=\min(CW_{min}*2,\ CW_{max\_Lim}) \tag{4}$$

If the network load is below the predetermined threshold, $\tfrac{1}{2}+\alpha$, and also below a second threshold, e.g., $\tfrac{1}{2}-\alpha$ (block 440), AP 110 may decrease $CW_{min}$, e.g., according to the following exemplary function (block 450):

$$CW_{min} = \max(CW_{min}/2, CW_{min\_Lim}) \qquad (5)$$

wherein $CW_{min\_Lim}$ may be the lower limit of $CW_{min}$, if desired.

AP 110 may dynamical adjust $CW_{min}$ and $CW_{max}$ according to changes in the network load (e.g., $P_{colisions}/P_{loss}$). AP 110 may dynamically adjust $CW_{max}$ according to this exemplary function:

$$CW_{max} = \min(CW_{min} * 4, CW_{max\_Lim}) \qquad (6),$$

wherein $CW_{max\_Lim}$ may be a maximum value of $CW_{max}$ (block 470). AP 110 may transmit a beacon with the dynamically adjusted parameters $CW_{min}$ and $CW_{max}$ to BSS stations, e.g., MUs 120, 130, if desired (block 480).

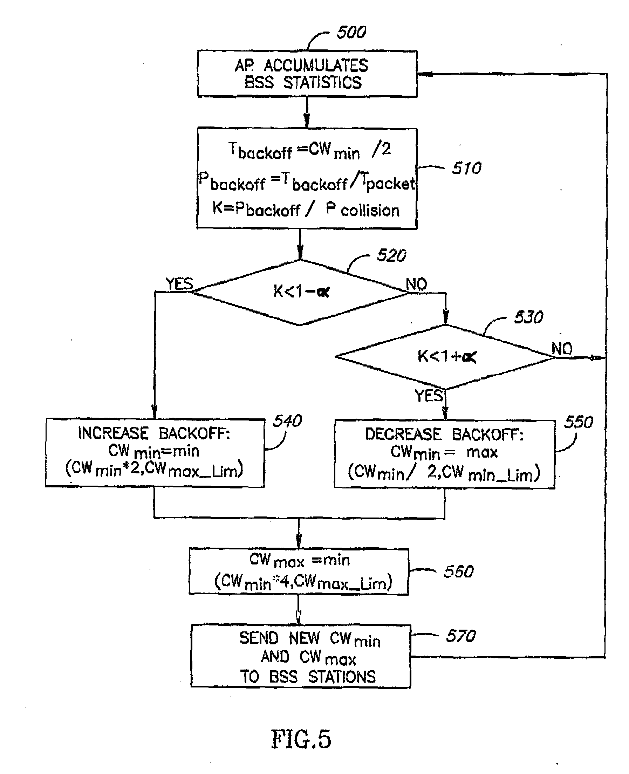

Turning to FIG. 5 an exemplary method of adjustment of CW parameters according to further exemplary embodiments of the present invention is shown. The method may dynamically adjust the $CW_{min}$ and $CW_{max}$ based on equilibrium between $P_{backoff}$, which may be related to a channel access backoff mechanism, and $P_{collisions}$, which may be related to collisions between two or more packets, wherein $P_{backoff}$ and $P_{collisions}$ may be referred to as packet loss parameters, if desired. For example, K may be defined as the equilibrium and may be denoted

$$K = P_{backoff}/P_{collision} \qquad (7).$$

AP 110 may accumulate the BSS statistic (block 500) and may calculate $T_{backoff}$, $P_{backoff}$ and K based on the statistic (block 510). AP 110 may compare the equilibrium K to a threshold $1-\alpha$ (block 520) and may increase $CW_{min}$ (block 540) if K is below the $1-\alpha$ threshold. If K is above the $1-\alpha$ threshold, AP 110 may compare equilibrium K to another threshold, e.g., $1+\alpha$ (block 530) and may decrease $CW_{min}$ (block 550) if K is below the $1+\alpha$ threshold, if desired.

Bocks 500, 510, 520, 530 may be repeated for additional received packets in the transmission. AP 110 may adjust $CW_{max}$ based on the adjusted $CW_{min}$ (block 560) and may send $CW_{min}$ and $CW_{max}$ to the BSS station, e.g., MUs 120, 130 (block 570), if desired.

## Claims

1. A method, in an access point (300) able to communicate through a wireless channel (184), of adjusting first and second contention window parameters, $CW_{min}$ and $CW_{max}$, wherein $CW_{min}$ and $CW_{max}$ are respectively the minimal and maximal sizes of a contention window, CW, the method comprising the steps of:

   selecting a channel access parameter based on the dynamically adjusted parameter of the contention window, wherein the channel access parameter is a time slot (210) within the contention window (360);
   transmitting the access parameter over the wireless channel; the method **characterised by** the steps of:

   determining a network load based on a ratio between a probability of collision parameter, $P_{collision}$, relating to a probability of collision between two or more packets transmitted from at least two mobile units, and a throughput loss parameter, $P_{loss}$; and
   adjusting the first and second contention window parameters, $CW_{min}$ and $CW_{max}$, according to said network load, wherein adjusting comprises:

      increasing a value of the first contention window parameter, $CW_{min}$, when said network load is above a first threshold (460);
      decreasing said value of the first contention window parameter, $CW_{min}$, when said network load is below said first threshold and below a second threshold (450); and
      dynamically adjusting the second contention window parameter, $CW_{max}$, according to the adjusted first contention window parameter, $CW_{min}$, based on a probability of collision between two or more packets transmitted from at least two mobile units.

2. The method of claim 1, wherein determining comprises:

   calculating the throughput loss parameter, $P_{loss}$, based on the probability of collision parameter, $P_{collision}$.

**3.** The method of claim 2, wherein the calculating comprises:

collecting statistics of a packet time, $T_{packet}$, to provide an average packet time;
estimating said probability of collision parameter, $P_{collision}$; and
estimating the network load based on the average packet time and the probability of collision parameter.

**4.** The method of claim 2, wherein adjusting the first and second contention window parameters, $CW_{min}$ and $CW_{max}$, comprises:

dynamically adjusting the first and second contention window parameters, $CW_{min}$ and $CW_{max}$ based on an equilibrium, K, between a backoff parameter, $P_{backoff}$, related to a channel access backoff mechanism, and said probability of collision parameter, $P_{collision}$.

**5.** The method of claim 4, comprising:

calculating said equilibrium parameter, K;
comparing the equilibrium parameter, K, to a threshold; and
adjusting the first and second contention window parameters, $CW_{min}$ and $CW_{max}$, based on the comparison.

**6.** The method of claim 4, wherein dynamically adjusting the first and second contention window parameters, $CW_{min}$ and $CW_{max}$, comprises:

adjusting the backoff parameter, $P_{backoff}$, based on the network load; and
adjusting a size of the contention window based on the adjusted backoff parameter, $P_{backoff}$.

**7.** A method in accordance with claim 1 comprising:

dynamically adjusting a parameter of a contention window based on the probability of collision parameter, $P_{collision}$.

**8.** The method of claim 7, wherein selecting comprises:

calculating the probability of collision parameter, $P_{collision}$, based on the throughput loss parameter, $P_{loss}$.

**9.** The method of claim 8, wherein calculating comprises:

collecting statistics of a packet time, $T_{packet}$, to provide a packet time parameter; and
estimating the network load based on the packet time parameter, and the probability of collision parameter, $P_{collision}$.

**10.** An access point (300) able to communicate through a wireless channel (184) and adjust first and second contention window parameters, $CW_{min}$ and $CW_{max}$, wherein $CW_{min}$ and $CW_{max}$ are respectively the minimal and maximal sizes of a contention window, CW, the device comprising:

a channel access controller (350) to select a channel access parameter based on a dynamically adjusted parameter of the contention window (360), wherein the channel access parameter is a time slot (210) within the contention window (360); and
a transmitter (330) to transmit the access parameter over the wireless channel (184),

wherein the channel access controller (350) is **characterized by**:

means for determining a network load based on a ratio between a probability of collision parameter, $P_{collision}$, relating to a probability of collision between two or more packets transmitted from at least two mobile units, and a throughput loss parameter, $P_{loss}$; and
means for adjusting the first and second contention window parameters, $CW_{min}$ and $CW_{max}$, according to said network load;
means for increasing a value of the first contention window parameter, $CW_{min}$, when a network load is above a first threshold (460);

means for decreasing said value of the first contention window parameter, $CW_{min}$, when said network load is below said first threshold and below a second threshold (450); and
means for dynamically adjusting the second contention window parameter, $CW_{max}$, according to the adjusted first contention window parameter, $CW_{min}$, based on a probability of collision between two or more packets transmitted from at least two mobile units.

11. The wireless communication device of claim 10, further comprising:

a calculator (380) to calculate a probability of collision parameter, $P_{collision}$, relating to a probability of collision between two or more packets transmitted from at least two mobile units, the probability of collision parameter $P_{collision}$, based on an estimated throughput loss parameter, $P_{loss}$, which is based on the collisions.

12. The wireless communication device of claim 10, wherein the calculator (380) comprises:

a statistic module (370) to accumulate a packet time, $T_{packet}$, of a received packet to provide a packet time parameter and to calculate said probability of collision parameter, $P_{collision}$.

13. The wireless communication device of claim 12, wherein the calculator (380) is able to estimate a network load based on the packet time, $T_{packet}$, parameter and the probability of collision parameter, $P_{collision}$, and to estimate the throughput loss parameter, $P_{loss}$, based on the network load.

14. The wireless communication device of claim 10, wherein the channel access controller (350) is able to adjust a backoff parameter, $P_{backoff}$, related to a channel access backoff mechanism based on a network load and to adjust a size of the contention window (200) based on the adjusted backoff parameter.

15. The wireless communication device of claim 10, wherein the channel access controller (350) is able to dynamically adjust the parameter of the contention window, CW, based on an equilibrium parameter, K, between a backoff parameter, $P_{backoff}$, relating to a channel access backoff mechanism and a probability of packet collision parameter $P_{collision}$ relating to a probability of collision between two or more packets transmitted from at least two mobile units.

16. The wireless communication device of claim 10, wherein the channel access controller (350) is able to operate according to a carrier-sense-multiple-access with collision avoidance with exponential backoff module provided by a carrier-sense-multiple-access with collision avoidance module.

17. A wireless communication system (100) comprising:

an access point comprising an apparatus to transmit the channel access parameter in accordance with any one of claims 10 to 16; and
one or more mobile units to receive the channel access parameter.

**Patentansprüche**

1. Verfahren in einem Zugangspunkt (300), der über einen drahtlosen Kanal (184) kommunizieren kann, zum Einstellen erster und zweiter Konkurrenzfensterparameter, $CW_{min}$ und $CW_{max}$, wobei $CW_{min}$ und $CW_{max}$ die minimale bzw. die maximale Größe eines Konkurrenzfensters, CW, sind, wobei das Verfahren die folgenden Schritte umfasst:

Auswählen eines Kanalzugangsparameters basierend auf dem dynamisch eingestellten Parameter des Konkurrenzfensters, wobei der Kanalzugangsparameter ein Zeitschlitz (210) in dem Konkurrenzfenster ist (360);
Senden des Zugangsparameters über den drahtlosen Kanal; wobei das Verfahren durch die folgenden Schritte gekennzeichnet ist:

Bestimmen einer Netzlast basierend auf einem Verhältnis zwischen einem Kollisionswahrscheinlichkeitsparameter, $P_{collision}$, der sich auf eine Kollisionswahrscheinlichkeit zwischen zwei oder mehr Paketen, die von wenigstens zwei mobilen Einheiten gesendet werden, bezieht, und einem Durchsatzverlustparameter, $P_{loss}$, und
Einstellen des ersten und des zweiten Konkurrenzfensterparameters, $CW_{min}$ und $CW_{max}$, gemäß der Netzlast, wobei das Einstellen Folgendes umfasst:

Erhöhen eines Werts des ersten Konkurrenzfensterparameters, $CW_{min}$, wenn die Netzlast oberhalb eines ersten Schwellenwerts (460) ist;

Verringern des Werts des ersten Konkurrenzfensterparameters, $CW_{min}$, wenn die Netzlast unterhalb des ersten Schwellenwerts und unterhalb eines zweiten Schwellenwerts (450) ist; und

dynamisches Einstellen des zweiten Konkurrenzfensterparameters, $CW_{max}$, gemäß dem eingestellten ersten Konkurrenzfensterparameter, $CW_{min}$, basierend auf einer Kollisionswahrscheinlichkeit zwischen zwei oder mehr Paketen, die von wenigstens zwei mobilen Einheiten gesendet werden.

**2.** Verfahren nach Anspruch 1, wobei das Bestimmen Folgendes umfasst:

Berechnen eines Durchsatzverlustparameters, $P_{loss}$, basierend auf dem Kollisionswahrscheinlichkeitsparameter, $P_{collision}$.

**3.** Verfahren nach Anspruch 2, wobei das Berechnen Folgendes umfasst:

Erheben von Statistik einer Paketzeit, $T_{packet}$, um eine mittlere Paketzeit bereitzustellen;
Schätzen des Kollisionswahrscheinlichkeitsparameters, $P_{collision}$, und
Schätzen der Netzlast basierend auf der mittleren Paketzeit und dem Kollisionswahrscheinlichkeitsparameter.

**4.** Verfahren nach Anspruch 2, wobei das Einstellen des ersten und zweiten Konkurrenzfensterparameters, $CW_{min}$ und $CW_{max}$, Folgendes umfasst:

dynamisches Einstellen des ersten und des zweiten Konkurrenzfensterparameters, $CW_{min}$ und $CW_{max}$, basierend auf einem Gleichgewicht, K, zwischen einem Backoff-Parameter, $P_{backoff}$, der sich auf einen Kanalzugangs-Backoff-Mechanismus bezieht, und dem Kollisionswahrscheinlichkeitsparameter, $P_{collision}$.

**5.** Verfahren nach Anspruch 4, das Folgendes umfasst:

Berechnen des Gleichgewichtsparameters, K;
Vergleichen des Gleichgewichtsparameters, K, mit einem Schwellenwert; und
Einstellen des ersten und des zweiten Konkurrenzfensterparameters, $CW_{min}$ und $CW_{max}$, basierend auf dem Vergleich.

**6.** Verfahren nach Anspruch 4, wobei das dynamische Einstellen des ersten und des zweiten Konkurrenzfensterparameters, $CW_{min}$ und $CW_{max}$, Folgendes umfasst:

Einstellen des Backoff-Parameters basierend auf der Netzlast; und
Einstellen einer Größe des Konkurrenzfensters basierend auf dem eingestellten Backoff-Parameter, $P_{backoff}$.

**7.** Verfahren nach Anspruch 1, das Folgendes umfasst:

dynamisches Einstellen eines Parameters eines Konkurrenzfensters basierend auf dem Kollisionswahrscheinlichkeitsparameter, $P_{collision}$.

**8.** Verfahren nach Anspruch 7, wobei das Auswählen Folgendes umfasst:

Berechnen des Kollisionswahrscheinlichkeitsparameters, $P_{collision}$, basierend auf dem Durchsatzverlustparameter, $P_{loss}$.

**9.** Verfahren nach Anspruch 8, wobei das Berechnen Folgendes umfasst:

Erheben von Statistik einer Paketzeit, $T_{packet}$, um einen Paketzeitparameter bereitzustellen; und
Schätzen der Netzlast basierend auf dem Paketzeitparameter und dem Kollisionswahrscheinlichkeitsparameter, $P_{collision}$.

**10.** Zugangspunkt (300), der über einen drahtlosen Kanal (184) kommunizieren und erste und zweite Konkurrenzfensterparameter, $CW_{min}$ und $CW_{max}$, einstellen kann, wobei $CW_{min}$ und $CW_{max}$ die minimale bzw. maximale Größe eines Konkurrenzfensters, CW, sind, wobei die Vorrichtung Folgendes umfasst:

eine Kanalzugangssteuereinheit (350), um eine Kanalzugangsparameter basierend auf einem dynamisch eingestellten Konkurrenzfenster (360) auszuwählen, wobei der Kanalzugangsparameter ein Zeitschlitz (210) in dem Konkurrenzfenster (360) ist; und

einen Sender (330), um den Zugangsparameter über den drahtlosen Kanal (184) zu senden,

wobei die Kanalzugangssteuereinheit (350) **gekennzeichnet ist durch**:

Mittel zum Bestimmen einer Netzlast basierend auf einem Verhältnis zwischen einem Kollisionswahrscheinlichkeitsparameter, $P_{collision}$, der sich auf eine Kollisionswahrscheinlichkeit zwischen zwei oder mehr Paketen bezieht, die von wenigstens zwei mobilen Einheiten gesendet werden, und einem Durchsatzverlustparameter, $P_{loss}$; und

Mittel zum Einstellen des ersten und des zweiten Konkurrenzfensterparameters, $CW_{min}$ und $CW_{max}$, gemäß der Netzlast;

Mittel zum Erhöhen eines Werts des ersten Konkurrenzfensterparameters, $CW_{min}$, wenn eine Netzlast oberhalb eines ersten Schwellenwerts (460) ist;

Mittel zum Verringern des Werts des ersten Konkurrenzfensterparameters, $CW_{min}$, wenn die Netzlast unterhalb des ersten Schwellenwerts und unterhalb eines zweiten Schwellenwerts (450) ist; und

Mittel zum dynamischen Einstellen des zweiten Konkurrenzfensterparameters, $CW_{max}$, gemäß dem eingestellten ersten Konkurrenzfensterparameter, $CW_{min}$, basierend auf einer Kollisionswahrscheinlichkeit zwischen zwei oder mehr Paketen, die von wenigstens zwei mobilen Einheiten gesendet werden.

11. Drahtlose Kommunikationsvorrichtung nach Anspruch 10, die ferner Folgendes umfasst:

eine Berechnungseinheit (380), um einen Kollisionswahrscheinlichkeitsparameter, $P_{collision}$, zu berechnen, der sich auf eine Kollisionswahrscheinlichkeit zwischen zwei oder mehr Paketen, die von wenigstens zwei mobilen Einheiten gesendet werden, bezieht, wobei der Kollisionswahrscheinlichkeitsparameter $P_{collision}$ auf einem geschätzten Durchsatzverlustparameter, $P_{loss}$, basiert, der auf Kollisionen basiert.

12. Drahtlose Kommunikationsvorrichtung nach Anspruch 10, wobei die Berechnungseinheit (380) Folgendes umfasst:

ein Statistikmodul (370), um eine Paketzeit, $T_{packet}$, eines empfangenen Pakets zu akkumulieren, um einen Paketzeitparameter bereitzustellen und den Kollisionswahrscheinlichkeitsparameter, $P_{collision}$, zu berechnen.

13. Drahtlose Kommunikationsvorrichtung nach Anspruch 12, wobei die Berechnungseinheit (380) eine Netzlast basierend auf dem Paketzeitparameter, $P_{packet}$, und dem Kollisionswahrscheinlichkeitsparameter, $P_{collision}$, schätzen kann und den Durchsatzverlustparameter, $P_{loss}$, basierend auf der Netzlast schätzen kann.

14. Drahtlose Kommunikationsvorrichtung nach Anspruch 10, wobei die Kanalzugangssteuereinheit (350) den Backoff-Parameter, $P_{backoff}$, der sich auf einen Kanalzugangs-Backoff-Mechanismus bezieht, basierend auf einer Netzlast einstellen kann und eine Größe des Konkurrenzfensters (200) basierend auf dem eingestellten Backoff-Parameter einstellen kann.

15. Drahtlose Kommunikationsvorrichtung nach Anspruch 10, wobei die Kanalzugangssteuereinheit (350) den Parameter des Konkurrenzfensters, CW, basierend auf einem Gleichgewichtsparameter, K, zwischen einem Backoff-Parameter, $P_{backoff}$, der sich auf einen Kanalzugangs-Backoff-Mechanismus bezieht, und einem Paketkollisionswahrscheinlichkeitsparameter, $P_{collision}$, der sich auf eine Wahrscheinlichkeit einer Kollision zwischen zwei oder mehr Paketen, die von wenigstens zwei mobilen Einheiten gesendet werden, bezieht, dynamisch einstellen kann.

16. Drahtlose Kommunikationsvorrichtung nach Anspruch 10, wobei die Kanalzugangssteuereinheit (350) gemäß einem trägersensitiven Mehrfachzugang mit Kollisionsvermeidung mit einem exponentiellen Backoff-Modul, der durch ein Modul für trägersensitiven Mehrfachzugang mit Kollisionsvermeidung bereitgestellt ist, arbeiten kann.

17. Drahtloses Kommunikationssystem (100), das Folgendes umfasst:

einen Zugangspunkt, der eine Einrichtung umfasst, um den Kanalzugangsparameter gemäß einem der Ansprüche 10 bis 16 zu senden; und

eine oder mehrere mobile Einheiten, um den Kanalzugangsparameter zu empfangen.

**Revendications**

1.  Procédé, dans un point d'accès (300) capable de communiquer à travers un canal sans fil (184), pour régler des premier et second paramètres de fenêtre de contention $CW_{min}$ et $CW_{max}$, où $CW_{min}$ et $CW_{max}$ sont respectivement les tailles minimum et maximum d'une fenêtre de contention, CW, le procédé comprenant les étapes suivantes :

    sélectionner un paramètre d'accès de canal sur la base du paramètre réglé dynamiquement de la fenêtre de contention, où le paramètre d'accès de canal est un intervalle de temps (210) situé dans la fenêtre de contention (360) ;
    transmettre le paramètre d'accès par le canal sans fil ; le procédé étant **caractérisé par** les étapes suivantes :

    déterminer une charge de réseau sur la base d'un ratio entre un paramètre de probabilité de collision, $P_{collision}$, relatif à une probabilité de collision entre deux, ou plus, paquets transmis à partir d'au moins deux unités mobiles, et un paramètre de perte de débit, $P_{loss}$ ; et
    régler les premier et second paramètres de fenêtre de contention, $CW_{min}$ et $CW_{max}$, conformément à ladite charge de réseau, où le réglage comprend les étapes suivantes :

    augmenter une valeur du premier paramètre de fenêtre de contention, $CW_{min}$, lorsque ladite charge de réseau est au-dessus d'un premier seuil (460) ;
    réduire ladite valeur du premier paramètre de fenêtre de contention, $CW_{min}$, lorsque ladite charge de réseau est au-dessous dudit premier seuil et au-dessous d'un second seuil (450) ; et
    régler, dynamiquement, le second paramètre de fenêtre de contention, $CW_{max}$, conformément au premier paramètre de fenêtre de contention réglé, $CW_{min}$, sur la base d'une probabilité de collision entre deux, ou plus, paquets transmis à partir d'au moins deux unités mobiles.

2.  Procédé selon la revendication 1, dans lequel la détermination comprend l'étape suivante :

    calculer le paramètre de perte de débit, $P_{loss}$, sur la base du paramètre de probabilité de collision, $P_{collision}$.

3.  Procédé selon la revendication 2, dans lequel l'étape consistant à calculer comprend les étapes suivantes :

    collecter des statistiques d'un temps de paquet, $T_{packet}$, pour délivrer un temps de paquet moyen ;
    estimer ledit paramètre de probabilité de collision, $P_{collision}$ ; et
    estimer la charge de réseau sur la base du temps de paquet moyen et du paramètre de probabilité de collision.

4.  Procédé selon la revendication 2, dans lequel le réglage des premier et second paramètres de fenêtre de contention, $CW_{min}$ et $CW_{max}$, comprend l'étape suivante :

    régler, dynamiquement, les premier et second paramètres de fenêtre de contention, $CW_{min}$ et $CW_{max}$, sur la base d'un équilibre, K, entre un paramètre de délai d'attente, $P_{backoff}$, relatif à un mécanisme de délai d'attente d'accès de canal, et ledit paramètre de probabilité de collision, $P_{collision}$.

5.  Procédé selon la revendication 4, comprenant les étapes suivantes :

    calculer ledit paramètre d'équilibre, K ;
    comparer le paramètre d'équilibre, K, à un seuil ; et
    régler les premier et second paramètres de fenêtre de contention, $CW_{min}$ et $CW_{max}$, sur la base de la comparaison.

6.  Procédé selon la revendication 4, dans lequel régler, dynamiquement, les premier et second paramètres de fenêtre de contention, $CW_{min}$ et $CW_{max}$, comprend les étapes suivantes :

    régler le paramètre de délai d'attente, $P_{backoff}$, sur la base de la charge de réseau ; et
    régler une taille de la fenêtre de contention sur la base du paramètre de délai d'attente, $P_{backoff}$.

7.  Procédé selon la revendication 1, comprenant l'étape suivante :

    régler, dynamiquement, un paramètre d'une fenêtre de contention sur la base du paramètre de probabilité de collision, $P_{collision}$.

**8.** Procédé selon la revendication 7, dans lequel la sélection comprend l'étape suivante :

calculer le paramètre de probabilité de collision, $P_{collision}$, sur la base du paramètre de perte de débit, $P_{loss}$.

**9.** Procédé selon la revendication 8, dans lequel le calcul comprend les étapes suivantes :

collecter des statistiques d'un temps de paquet, $T_{packet}$, pour délivrer un paramètre de temps de paquet ; et estimer la charge de réseau sur la base du paramètre de temps de paquet, et du paramètre de probabilité de collision, $P_{collision}$.

**10.** Point d'accès (300) capable de communiquer à travers un canal sans fil (184) et de régler des premier et second paramètres de fenêtre de contention $CW_{min}$ et $CW_{max}$, où $CW_{min}$ et $CW_{max}$ sont respectivement les tailles minimum et maximum d'une fenêtre de contention, CW, le dispositif comprenant :

un contrôleur d'accès de canal (350) pour sélectionner un paramètre d'accès de canal sur la base d'un paramètre réglé dynamiquement de la fenêtre de contention (360), où le paramètre d'accès de canal est un intervalle de temps (210) situé dans la fenêtre de contention (360) ; et
un transmetteur (330), pour transmettre le paramètre d'accès par le canal sans fil (184),
où le contrôleur d'accès de canal (350) est **caractérisé par** :

un moyen pour déterminer une charge de réseau sur la base d'un ratio entre un paramètre de probabilité de collision, $P_{collision}$, relatif à une probabilité de collision entre deux, ou plus, paquets transmis à partir d'au moins deux unités mobiles, et un paramètre de perte de débit, $P_{loss}$ ; et
un moyen pour régler les premier et second paramètres de fenêtre de contention, $CW_{min}$ et $CW_{max}$, conformément à ladite charge de réseau,
un moyen pour augmenter une valeur du premier paramètre de fenêtre de contention, $CW_{min}$, lorsqu'une charge de réseau est au-dessus d'un premier seuil (460) ;
un moyen pour réduire ladite valeur du premier paramètre de fenêtre de contention, $CW_{min}$, lorsque ladite charge de réseau est au-dessous dudit premier seuil et au-dessous d'un second seuil (450) ; et
un moyen pour régler, dynamiquement, le second paramètre de fenêtre de contention, $CW_{max}$, conformément au premier paramètre de fenêtre de contention réglé, $CW_{min}$, sur la base d'une probabilité de collision entre deux, ou plus, paquets transmis à partir d'au moins deux unités mobiles.

**11.** Dispositif de communication sans fil selon la revendication 10, comprenant en outre :

un calculateur (380) pour calculer une paramètre de probabilité de collision, $P_{collision}$, relatif à une probabilité de collision entre deux, ou plus, paquets transmis à partir d'au moins deux unités mobiles, le paramètre de probabilité de collision, $P_{collision}$, basé sur un paramètre de perte de débit estimé, $P_{loss}$, qui est basé sur les collisions.

**12.** Dispositif de communication sans fil selon la revendication 10, dans lequel le calculateur (380) comprend :

un module statistique (370) pour accumuler un temps de paquet, $T_{packet}$, d'un paquet reçu pour délivrer un paramètre de temps de paquet et pour calculer ledit paramètre de probabilité de collision, $P_{collision}$.

**13.** Dispositif de communication sans fil selon la revendication 12, dans lequel le calculateur (380) est capable d'estimer une charge de réseau sur la base du paramètre de temps de paquet, $T_{packet}$, et du paramètre de probabilité de collision, $P_{collision}$, et d'estimer le paramètre de perte de débit, $P_{loss}$, sur la base de la charge de réseau.

**14.** Dispositif de communication sans fil selon la revendication 10, dans lequel le contrôleur d'accès de canal (350) est capable de régler un paramètre de délai d'attente, $P_{backoff}$, relatif à un mécanisme de délai d'attente d'accès de canal, sur la base d'une charge de réseau et de régler une taille de la fenêtre de contention (200) sur la base du paramètre de délai d'attente réglé.

**15.** Dispositif de communication sans fil selon la revendication 10, dans lequel le contrôleur d'accès de canal (350) est capable de régler, dynamiquement, le paramètre de la fenêtre de contention, CW, sur la base d'un paramètre d'équilibre, K, entre un paramètre de délai d'attente, $P_{backoff}$, relatif à un mécanisme de délai d'attente d'accès de canal, et un paramètre de probabilité de collision de paquets, $P_{collision}$, relatif à une probabilité de collision entre deux, ou plus, paquets transmis à partir d'au moins deux unités mobiles.

16. Dispositif de communication sans fil selon la revendication 10, dans lequel le contrôleur d'accès de canal (350) est capable de fonctionner, conformément à un accès multiple avec écoute de porteuse avec évitement de collision, avec un module de délai d'attente exponentiel, fourni par un accès multiple avec écoute de porteuse avec un module d'évitement de collision.

17. Système de communication sans fil (100) comprenant :

un point d'accès comprenant un appareil pour transmettre le paramètre d'accès de canal selon l'une quelconque des revendications 10 à 16 ; et
une ou plusieurs unités mobiles pour recevoir le paramètre d'accès de canal.

FIG.1

FIG.2

FIG.3

FIG.4

**FIG.5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020110085 A1

**Non-patent literature cited in the description**

- **HAITAO WU et al.** IEEE 802.11 distributed coordination function (DCF): analysis and enhancement. *ICC 2002,* 28 April 2002, 605-609

- **VISTAS V.** Throughput analysis of linear backoff scheme in wireless LANs. *Electronics Letters, IEE Stevenage,* 09 January 2003, vol. 39 (1), 99-100